(19) **Europäisches Patentamt / European Patent Office / Office européen des brevets**

(11) **EP 4 116 870 A1**

(12) **EUROPEAN PATENT APPLICATION**

(43) Date of publication:
**11.01.2023 Bulletin 2023/02**

(21) Application number: **21184408.9**

(22) Date of filing: **08.07.2021**

(51) International Patent Classification (IPC):
**G06K 9/00** *(2022.01)*   **G06K 9/62** *(2022.01)*

(52) Cooperative Patent Classification (CPC):
**G06K 9/6287; G06V 20/46; G06V 20/49; G06V 20/56**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
- **Toyota Jidosha Kabushiki Kaisha**
  **Toyota-shi, Aichi-ken, 471-8571 (JP)**
- **Rheinische Friedrich-Wilhelms-Universität Bonn**
  **53113 Bonn (DE)**

(72) Inventors:
- **FRANCESCA, Gianpiero**
  **1140 BRUSSELS (BE)**
- **DESPINOY, Fabien**
  **1140 BRUSSELS (BE)**
- **SOURI, Yaser**
  **53113 BONN (DE)**
- **ABU FARHA, Yazan**
  **53113 BONN (DE)**
- **GALL, Juergen**
  **53113 BONN (DE)**

(74) Representative: **Cabinet Beau de Loménie**
**158, rue de l'Université**
**75340 Paris Cedex 07 (FR)**

(54) **A COMPUTER-IMPLEMENTED METHOD FOR SEGMENTING PATTERNS IN A SEQUENCE OF FRAMES**

(57)   A computer-implemented method for segmenting patterns in a sequence of frames over a succession dimension, the method comprising:
- computing frame-wise pattern probability estimates (26) for the sequence;
- inferring, from the frame-wise pattern probability estimates (26) and a set of possible patterns, predicted frame-wise pattern labels (32) for the sequence, wherein the inferring comprises iteratively optimizing a differentiable approximation ($E^*$) of an energy function, the energy function being a non-differentiable function that measures a compatibility between the frame-wise pattern probability estimates (26), the set of possible patterns and the predicted frame-wise pattern labels in the sequence.

FIG. 5

**Description**

TECHNICAL FIELD

The present disclosure relates to the field of automatic recognition, and more particularly to a computer-implemented method for segmenting patterns in a sequence of frames, such as a sequence of images. The method may find applications in all kind of industries, including the automotive industry. For instance, the method may be used to understand a vehicle's environment in order to adequately control it, or to monitor and support human activities in places such as a factory.

TECHNOLOGICAL BACKGROUND

Machine learning models, among other systems, may be trained to segment patterns in a sequence of frames, i.e. to analyze the sequence of frames in order to detect which sub-ranges of the sequence include some learnt patterns. Generally, the machine learning model is designed to output frame-wise pattern probability estimates, i.e. the probabilities that every one of the frames includes this or that pattern. However, these estimates may be noisy and an inference step is generally added to make the predictions more realistic.

The inference approaches proposed so far have been computationally expensive. Thus, they are not best suited for real-time applications, such as autonomous driving or manufacturing monitoring. Therefore, there is a need for a new type of computer-implemented method for segmenting patterns in a sequence of frames.

SUMMARY

In this respect, the present disclosure relates to a computer-implemented method for segmenting patterns in a sequence of frames over a succession dimension, the method comprising:

- computing frame-wise pattern probability estimates for the sequence;
- inferring, from the frame-wise pattern probability estimates and a set of possible patterns, predicted frame-wise pattern labels for the sequence, wherein the inferring comprises iteratively optimizing a differentiable approximation of an energy function, the energy function being a non-differentiable function that measures a compatibility between the frame-wise pattern probability estimates, the set of possible patterns and the predicted frame-wise pattern labels in the sequence.

For the sake of conciseness, this method is referred to hereinafter as the segmenting method.
A sequence of frames is an ordered series of frames along one dimension, known as the succession dimension, which can be e.g. time or space. A few non-limiting examples are given below:

- the sequence of frames may be an audio track, i.e. a succession of sounds over time, and the pattern to be segmented may be an instrument and/or a speaker;
- the sequence of frames may be a video, i.e. a succession of images over time, or a plurality of images, and the pattern to be segmented may be an action shown by the video or the plurality of images;
- the sequence of frames may be a three-dimensional (3D) image, seen as a succession of two-dimensional images over a succession dimension which is a third spatial dimension, and the pattern to be segmented may be an object shown in the 3D image.
- the sequence of frames may be a strip of images (e.g. satellite images), i.e. a succession of images over a spatial dimension, and the pattern to be segmented may be a given region (e.g. a region of land);
- the sequence of frames may be an electrical signal (e.g. an electrocardiogram input), i.e. a succession of electrical values over time, and the pattern to be segmented may be a given motion of the signal.

The sequence of frames may be obtained from a sensor, e.g. a microphone, an imaging device such as a camera, electrodes, etc.
The contents of the frames are such that a plurality of frames forms a pattern, and the segmentation aims to determine which pattern is included in which (desirably continuous) subset of the frames. Thus, in the present disclosure, unless otherwise mentioned, the segmentation includes the task sometimes referred to as alignment and corresponding to aligning, in the succession dimension, a known output pattern with an input sequence of frames.
A frame-wise pattern probability estimate is a predicted probability that a given frame corresponds to a given pattern. For instance, the frame-wise pattern probability estimates may comprise a N-component vector for each frame, with each i-th component, i from 1 to N, being the probability that the given frame corresponds to the i-th pattern learnt by the machine learning model. As mentioned above, the frame-wise pattern probability estimate may be obtained by methods known *per se,* e.g. machine learning models.

The inference step takes, as an input, not only the frame-wise pattern probability estimates but also a set of possible patterns. The set of possible patterns, also known as a grammar, comprises possible outputs for the segmenting method.

The frame-wise pattern labels predicted (output) by the inference step may be expressed directly, e.g. as a given pattern label for each frame, or indirectly, e.g. as an ordered list of pattern labels associated to respective lengths. A pattern length is a difference or distance between the frame where a pattern ends and the frame where that pattern begins. The direct and indirect representations are equivalent and it is possible to compute one from the other.

The energy function is a cost function which measures compatibility between the inputs, i.e. the frame-wise pattern probability estimates and the set of possible patterns, and the outputs, i.e. the predicted frame-wise pattern labels in the sequence.

The energy function is not differentiable because it takes natural numbers as an input, e.g. the lengths of the predicted patterns, and/or it may involve a non-differentiable operator (e.g. a max function or an IF operator). By replacing the energy function by an approximation thereof, it is possible to use a broader range of iterative optimizations and to make the inference step yield faster results for a comparable, if not better performance. As a consequence, the segmenting method can be used in real-time applications such as autonomous or assisted driving, or manufacturing monitoring.

Surprisingly, the inventors have also found that thanks to this improved inference, the segmentation method proved having a greater robustness to initialization.

Optionally, each frame comprises an image, in particular a digital image. The image may be a 1D image, 2D image, 3D image, etc. As shown in the above examples, the succession dimension of the images may be time, space, or yet another succession dimension. The succession of images may have the same dimensionality or not as a single frame.

Optionally, the energy function is non-differentiable with respect to pattern lengths. In particular, in case the number of frames is finite, then the pattern lengths as defined above are discrete too, and a function of the pattern lengths, such as the energy function (or more simply the energy), may not be differentiated with respect to the pattern lengths.

Optionally, the differentiable approximation of the energy function is optimized by a gradient descent method. Gradient descent methods are iterative methods known *per se* in the art. In spite of their advantages, including efficiency, they require the cost function or energy function to be differentiable with respect to the variables to optimize. Therefore, a gradient descent method can be applied to the differentiable approximation of the energy function. For instance, in the present method, the predicted frame-wise pattern labels at a given iteration step may be updated based on the gradient of the approximation of the energy function with respect to the frame-wise pattern labels at the preceding iteration step.

In addition, gradient descent methods are so-called "anytime algorithms", which means that they provide a result after every iteration step and can be stopped as early as desired. Thus, the number of iterations can be chosen, which provides flexibility for the method and a better speed vs. accuracy trade-off.

Optionally, the energy function comprises a non-differentiable combination of terms, and the differentiable approximation of the energy function is calculated by combining said terms through a mask comprising at least one differentiable plateau function.

The combination may be a sum and/or a product of terms which are themselves non differentiable. A plateau function is a function which has a first value (e.g. 1) over a first range and a second value (e.g. 0) everywhere else, except for the boundary regions of the first range where the function is differentiably transitioned between the first value and the second value. The mask may be configured to locate a pattern over the succession dimension in the sequence of frames.

In these embodiments, the approximation keeps the physical meaning of the energy, because the approximation of the energy function is based on the same terms as the energy function, but makes it differentiable. This enhances explainability.

Optionally, each of the at least one differentiable plateau function is parameterized by at least one of a position of the plateau over the succession dimension, a length of the plateau and a sharpness of the plateau. The position of the plateau over the succession dimension may include an identification of one or two frames on which the plateau is centered. A length of the plateau may include a length of the plateau in the succession dimension, e.g. a number of the frames covered by the plateau. A sharpness of the plateau may represent how sharp the transition is between the aforementioned first and second values. The sharpness may be set as a hyperparameter, i.e. a parameter that is chosen beforehand and regarded as constant in the segmenting method. In contrast, the position and the length of the plateau may correspond to the predicted pattern lengths (or, equivalently, the predicted frame-wise pattern labels).

Optionally, the set of possible patterns comprises at least one ordered list of the patterns. An order list of the patterns, also known as a transcript, may help the segmenting method to identify a combination of the possible patterns.

Thus, the segmenting method is more accurate. The set of possible patterns may comprise a plurality of such ordered lists.

Optionally, the energy function is a weighted sum of an observation energy, which represents a cost of assigning the pattern labels to each frame, and a length energy, which penalizes deviation of the length of a given pattern from a reference length distribution for said given pattern. Thus, the energy function takes into account two different aspects. The observation energy aims to ensure that the predicted frame-wise pattern labels are consistent with the frame-wise pattern probability estimates. The length energy aims to ensure that the lengths of the predicted patterns are consistent with the usual lengths observed for these patterns, represented by a reference length distribution for every pattern. This allows a more realistic output for the segmentation method. The reference length distribution, also known as a length prior, may be predetermined and given to the method as such, or learned, e.g. based on the training data of the segmentation method.

Optionally, the length energy is approximated based on a Laplace distribution or a Gaussian distribution. Both distributions can be differentiated. The Laplace distribution takes into account the absolute value of the difference between a predicted length of a predicted pattern and an average length of that pattern. The Gaussian distribution takes into account the quadratic difference between a predicted length of a predicted pattern and an average length of that pattern. Differentiating the Laplace or Gaussian distributions may require relaxing the pattern length from natural to real numbers.

Optionally, each step of said iterative optimizing comprises at least two parallelizable calculations. For instance, calculations of at least some of the following values can be parallelized: the position of the plateau over the succession dimension, the length of the plateau over the succession dimensions, element-wise matrix multiplications, gradient, etc. More generally, all the operations performed in the succession dimension may be parallelized, because the intermediate values within each iteration step do not dependent from one another. Therefore, the segmentation method is even faster to implement, and thus better suited for real-time applications.

Optionally, the optimizing has a complexity which is linear with respect to a number of the frames. The number of frames, also seen as the length of the sequence, is generally the highest number involved in complexity calculations. Therefore, being linear with respect to the number of frames improves complexity with respect to previous methods which inherently have a quadratic complexity, even if this quadratic complexity was somehow limited in practice. As a consequence, the segmentation method is even faster to implement, and thus better suited for real-time applications.

Optionally, the optimizer has an adaptive learning rate for at least one of the parameters, preferably each of the parameters. The optimizer is configured to perform the aforementioned iterative optimization. Thanks to having an adaptive learning rate, the optimizer makes convergence of the iterative optimization faster. For instance, suitable optimizers include Adam (Kingma, Diederik P., and Jimmy Ba. "Adam: A method for stochastic optimization." ICLR 2015.), Adagrad

(Duchi, John, Elad Hazan, and Yoram Singer. "Adaptive subgradient methods for online learning and stochastic optimization." Journal of machine learning research 12.7 (2011).), etc.

The present disclosure is further related to a computer program including instructions for executing the steps of the above described method for segmenting patterns in a sequence of frames when said program is executed by a computer. This program can use any programming language and take the form of source code, object code or a code intermediate between source code and object code, such as a partially compiled form, or any other desirable form.

The present disclosure is further related to a recording medium readable by a computer and having recorded thereon a computer program including instructions for executing the steps of the above described method for segmenting patterns in a sequence of frames. The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

The present disclosure is further related to a system for segmenting patterns in a sequence of frames over a succession dimension, the system comprising:

- a computing module configured to compute frame-wise pattern probability estimates for the sequence;
- an inferring module configured to infer, from the frame-wise pattern probability estimates and a set of possible patterns, predicted frame-wise pattern labels for the sequence, wherein the inferring comprises iteratively optimizing a differentiable approximation of an energy function, the energy function being a non-differentiable function that measures a compatibility between the frame-wise pattern probability estimates, the set of possible patterns and the predicted frame-wise pattern labels in the sequence.

The system may be configured to implement the segmentation method according to any one of the above-described embodiments.

In particular, the system may further comprise an acquisition module to acquire the sequence of frames. The acquisition module may be connected to a detector such as an imaging device, a camera, a microphone, an electrical sensor, electrodes, etc.

The present disclosure is further related to a driving method for a vehicle, comprising:

- acquiring a sequence of frames from at least one in-vehicle sensor;
- segmenting patterns in the sequence of sensors according to the above-described method;
- controlling the vehicle based on the predicted frame-wise pattern labels in the sequence of frames.

As a consequence of the aforementioned advantages, the vehicle can be controlled automatically in a prompt and accurate manner.

BRIEF DESCRIPTION OF THE DRAWINGS

The invention and advantages thereof will be better understood upon reading the detailed description which follows, of embodiments given as non-limiting examples. This description refers to the appended drawings, wherein:

- Fig. 1 is a diagram showing a driving method and a segmenting method according to an embodiment;
- Fig. 2 is a diagram showing a segmenting system according to an embodiment;
- Fig. 3 diagrammatically illustrates an iteration step of a segmenting method according to an embodiment;
- Fig. 4 is a chart plotting the accuracy vs. execution time of various inference approaches;
- Fig. 5 illustrates the application of the segmenting method on a concrete example.

DETAILED DESCRIPTION OF EMBODIMENTS

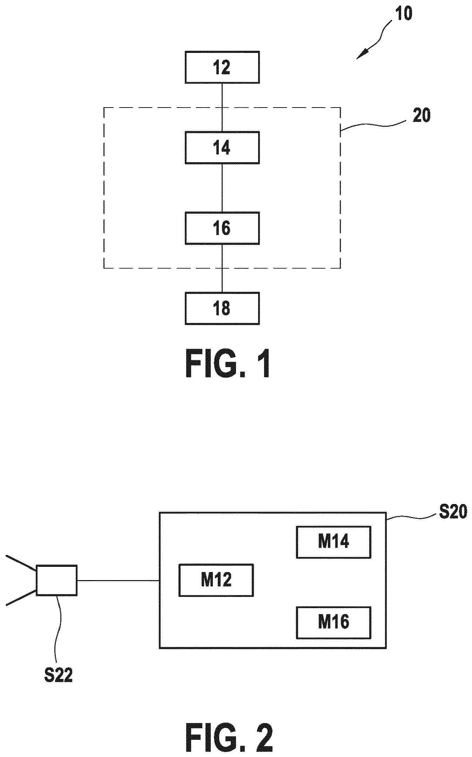

Figure 1 shows a diagram of a segmenting method 20 for segmenting patterns in a sequence of frames according to embodiments of the present disclosure. The segmenting method 20 comprises a computing step 14 of computing frame-wise pattern probability estimates for the sequence, and an inferring step 16 of inferring predicted frame-wise pattern labels for the sequence based on the frame-wise pattern probability estimates.

The segmenting method 20 may be used in the context of a driving method 10 for driving a vehicle, which method may further comprise an acquisition step 12 of acquiring the sequence of frames from at least one in-vehicle sensor, and a controlling step 18 of controlling the vehicle based on the frame-wise pattern labels in the sequence of frames predicted by the segmentation method 20.

In other embodiments, the segmenting method 20 may be used in the context of a method for supporting human activities in a factory. For instance, the method may further comprise an acquisition step of acquiring the sequence of frames from at least one sensor in the factory, and a controlling step of controlling the factory facilities (i.e. starting/stopping a device, issuing a warning signal, recording data, etc.) based on the frame-wise pattern labels in the sequence of frames predicted by the segmentation method 20.

Figure 2 illustrates a segmenting system S20 for segmenting patterns in a sequence of frames, comprising a computing module M14 configured to compute frame-wise pattern probability estimates for the sequence, and an inferring module M16 configured to infer, from the frame-wise pattern probability estimates and a set of possible patterns, predicted frame-wise pattern labels for the sequence.

The segmenting system S20 may further comprise an acquisition module M12 configured to acquire a sequence of frame from a sensor S22, e.g. an in-vehicle sensor or a factory sensor, e.g. a camera. A camera is an imaging device configured to acquire at least one image.

The segmenting system S20 may have various further functions, e.g. may be integrated in a vehicle and may additional be configured to receive and/or output information from/to the vehicle.

The segmenting system S20 may comprise an electronic circuit, a processor (shared, dedicated, or group), a combinational logic circuit, a memory that executes one or more software programs, and/or other suitable components that provide the described functionality. In other words, the segmenting system S20 may be a computer device. The segmenting system S20 may be connected to a memory, which may store data, e.g. a computer program which when executed, carries out the segmenting method 20 or the driving method 10 according to the present disclosure. In particular, the segmenting system S20 or the memory may store software which comprises a computer program including instructions for executing the steps of the segmenting method 20 or the driving method 10. More generally, the segmenting system S20 may be configured to implement the segmenting method 20 or the driving method 10.

The acquiring module M12, the computing module M14 and/or the inferring module M16 may be implemented as software running on the segmenting system S20 or as hardware elements of the segmenting system S20.

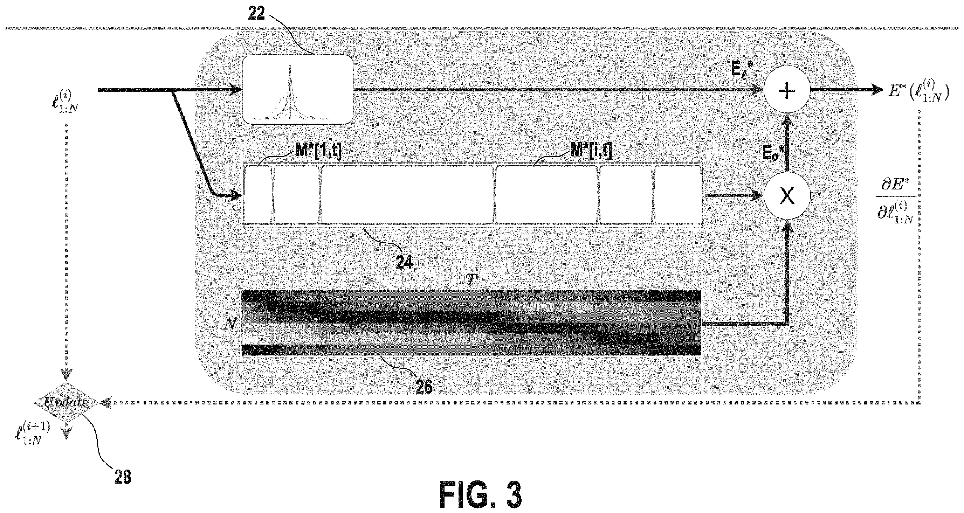

In the following, an embodiment of the segmenting method 20 is detailed with reference to Figs. 3 to 5, focusing on an application to segmenting actions in a video, i.e. segmenting patterns in a sequence of frames over a succession dimension, wherein each pattern correspond to an action performed in the video, each frame comprises an image and the succession dimension is time. However, the principles explained hereinafter can be generalized by the skilled person to any pattern other than actions, any succession dimension other than time, and/or any frame other than images.

Action segmentation aims to temporally localize all the action segments occurring in a video. The actions *per se* are known from a predefined set of a plurality of classes (corresponding to the aforementioned set of possible patterns). The predefined set of classes may include a background class is used to cover uninteresting parts of a video. The input video of length $T$ (i.e. comprising $T$ frames) is usually represented as a set of d-dimensional features vectors $x_{1:T} = (x_1,...,x_T)$. These features are extracted offline and are assumed to be the input to the action segmentation model. In other words, the frames may be pretreated so that the computing step 14 takes the features vectors as an input, and not the raw images. As an alternative, the computing step 14 may comprise a feature extracting step.

The output of action segmentation can be represented in two ways: either a frame-wise representation $y_{1:T} = (y_1,...,y_T)$ where $y_t$ represents the action label at time t, or a segment-wise representation $S_{1:N} = (S_1,...S_N)$ where segment $s_n$ is represented by both the action label of the segment $c_n$ and its corresponding length $\ell_n$ i.e. $s_n = (c_n, \ell_n)$. The ordered list of actions $c_{1:N}$ is usually referred to as the transcript.

These two representations are equal and redundant i.e. it is possible to compute one from the other. In order to transfer from the segment-wise to the frame-wise representation, a function $\alpha(t; c_{1:N}, \ell_{1:N})$ is introduced, which outputs the action label at frame t given the segment-wise labeling. For brevity, $\alpha(t; c_{1:N}, \ell_{1:N})$ is written simply as $\alpha(t)$.

The target labels to train a segmentation model depend on the level of supervision. In fully supervised action segmentation, the target label for each frame is basically provided. However, in weakly supervised approaches only the ordered list of action labels are provided during training while their lengths are unknown.

Some recent fully supervised approaches for action segmentation directly predict the frame-wise representation $y_{1:T}$. During testing (i.e. when actually using the model, as opposed to training), the prediction is made by choosing the action label with the highest probability for each frame.

Conversely, some recent weakly supervised action segmentation approaches include an inference stage during testing where the segment-wise representation are explicitly predicted. This inference stage involves a dynamic programming algorithm for solving an optimization problem which is a computational bottleneck for these approaches.

In addition, the inventors have found that the inference stage could enhance the performance of fully supervised approaches as well.

During testing, the inference stage involves an optimization problem to find the most likely segmentation for the input video i.e.,

$$c_{1:N}, \ell_{1:N} = \underset{\hat{c}_{1:N}, \hat{\ell}_{1:N}}{\operatorname{argmax}} \{ p(\hat{c}_{1:N}, \hat{\ell}_{1:N} | x_{1:T}) \}. \tag{1}$$

Given the transcript $c_{1:N}$, the inference stage boils down to find the segment lengths $\ell_{1:N}$ by aligning the transcript to the input video i.e.,

$$\ell_{1:N} = \underset{\hat{\ell}_{1:N}}{\operatorname{argmax}} \{ p(\hat{\ell}_{1:N} | x_{1:T}, \hat{c}_{1:N}) \}. \tag{2}$$

Based on the set of possible patterns, the transcript may be found by various methods, e.g. iterating over the transcripts seen during training and selecting the transcript that achieves the most likely alignment by optimizing (2), or the transcript may be predicted by a sequence to sequence network, which is known *per se* in the art.

The probability defined in (2) is broken down by making independences assumption between frames

$$p(\hat{\ell}_{1:N} | x_{1:T}, \hat{c}_{1:N}) = \prod_{t=1}^{T} p(\alpha(t; c_{1:N}, \ell_{1:N}) | x_t) \\ \cdot \prod_{n=1}^{N} p(\ell_n | c_n) \tag{3}$$

where $p(\alpha(t)|x_t)$ is referred to as the observation model and $p(\ell_n|c_n)$ as the length model. The observation model estimates the frame-wise action probabilities and may be implemented using a neural network. The length model is used to constrain the inference defined in (2) with the assumption that the length of segments for the same action follow a particular probability distribution (also referred to hereinafter as the reference length distribution for said action, i.e. for said pattern). The segment length is usually modelled by a Poisson distribution with a class dependent mean parameter $\lambda_n$ i.e.,

$$p(\ell_n|c_n) = \frac{\lambda_n^{\ell_n} exp(-\lambda_n)}{\ell_n!}. \qquad (4)$$

An exact solution to the inference problem (2) may be found using a Viterbi-like dynamic programming method (see e.g. Alexander Richard, Hilde Kuehne, Ahsan Iqbal, and Juergen Gall. Neuralnetwork-viterbi: A framework for weakly supervised video learning. In CVPR, 2018.). First an auxiliary function $Q(t,\ell,n)$ is defined that yields the best probability score for a segmentation up to frame t satisfying the following conditions: the length of the last segment is $\ell$, and the last segment was the n-th segment with label $c_n$. The auxiliary function $Q$ can be computed recursively. The following two cases are distinguished. The first case defines when no new segment is hypothesized, i.e $\ell > 1$. Then,

$$Q(t,\ell,n) = Q(t-1,\ell-1,n) \cdot p(c_n|x_t), \qquad (5)$$

with the current frame probability being multiplied with the value of the auxiliary function at the previous frame. The second case is a new segment being hypothesized at frame t, i.e. $\ell = 1$. Then,

$$Q(t,\ell=1,n) = \max_{\hat{\ell}}\{ Q(t-1,\hat{\ell},n-1) \cdot p(c_n|x_t) \cdot p(\hat{\ell}|c_{n-1}))\} \qquad (6)$$

where the optimization is calculated over all possible previous segments with length $\hat{\ell}$ and label $c_{n-1}$. Here the probability of the previous segment having length $\hat{\ell}$ and label $c_{n-1}$ is being multiplied to the previous value of the auxiliary function.

The most likely alignment is given by

$$\max_{\ell}\{ Q(T,\ell,N) \cdot p(\ell|c_N)\}. \qquad (7)$$

The optimal lengths can be obtained by keeping track of the maximizing arguments $\hat{\ell}$ from (6).

The time complexity of the above exact inference is quadratic in the length of the video T and linear in the number of segments N. As input videos for action segmentation are usually long, it becomes computationally expensive to calculate. In practice, it has been proposed to limit the maximum size of each segment to a fixed value of $L = 2000$. The final time complexity of exact inference is $O(LNT)$. Furthermore, this optimization process is inherently not parallelizable. This is due to the max operation in (6). Experiments have shown that this inference stage is the main computational bottleneck of action segmentation approaches.

For these reasons, the present discloses introduces a fast inference step for the segmenting method. The fast inference is applicable in both weakly supervised and fully supervised action segmentation, and flexible enough to work with different action segmentation methods.

Maximizing probability (2) can be rewritten as minimizing the negative log of that probability

$$\begin{aligned}\max\ & \{p(\hat{\ell}_{1:N}|x_{1:T},\hat{c}_{1:N})\} = \\ \min\ & \{-\log(p(\hat{\ell}_{1:N}|x_{1:T},\hat{c}_{1:N}))\}\end{aligned} \qquad (8)$$

which is referred to as the energy $E(\ell_{1:N})$. The energy, or energy function, measures a compatibility between the frame-wise pattern probability estimates (here computed from the feature vectors $x_{1:T}$), the set of possible patterns and the predicted frame-wise pattern labels in the sequence (here represented by $\hat{c}_{1:N}$ and $\hat{\ell}_{1:N}$). Using (3) the energy can be rewritten as

$$E(\ell_{1:N}) = \quad -\log\left(p(\ell_{1:N}|x_{1:T}, c_{1:N})\right)$$

$$= \quad -\log\left(\prod_{t=1}^{T} p\left(\alpha(t)|x_t\right) \cdot \prod_{n=1}^{N} p\left(\ell_n|c_n\right)\right)$$

$$= \quad \underbrace{\sum_{t=1}^{T} -\log\, p\left(\alpha(t)|x_t\right)}_{E_o} + \underbrace{\sum_{n=1}^{N} -\log\, p\left(\ell_n|c_n\right)}_{E_\ell}. \tag{9}$$

The first term in (9), $E_o$ is referred to as the observation energy. This term calculates the cost of assigning the labels for each frame and will be calculated from the frame-wise probability estimates. The second term $E_\ell$ is referred to as the length energy. This term is the cost of each segment having a length given that some average length is assumed for actions of a specific class.

In other words, the energy function is a weighted sum of an observation energy, which represents a cost of assigning the pattern labels to each frame, and a length energy, which penalizes deviation of the length of a given pattern from a reference length distribution for said given pattern.

As the energy function $E(\ell_{1:N})$ defined in (9) is not differentiable, e.g. with respect to the lengths, it is proposed to calculate a relaxed and approximate energy function $E^*(\ell_{1:N})$ that is differentiable. Thus, $E^*(\ell_{1:N})$ is a differentiable approximation of the energy function $E(\ell_{1:N})$.

As explained above, the approximate energy function being differentiable gives access to a wider range of optimization method in order to avoid the need for time-consuming dynamic programming. As a consequence, the present disclosure proposes that the inferring step 16 comprises iteratively optimizing the differentiable approximation of the energy function. In particular, the differentiable approximation of the energy function may be optimized by a gradient descent method, such as SGD (Stochastic Gradient Descent). The iterations start with an initial estimate of the lengths and update said estimate to minimize the approximate energy function. The initial estimate of the lengths may be obtained from the length model of each approach or calculated from training data when available; that is, if the length model is not given as an input to the segmentation method, the segmentation method may build its own length model based on training data. In yet another embodiment, in particular if no information is provided about the lengths, the lengths may be initialized equal to one another; as a consequence, the length energy term would not play any role in the optimization of the approximate energy function.

The energy function $E$ as defined in (9) is not differentiable in two parts. First the observation energy term $E_o$ is not differentiable because of the $\alpha(t)$ function. Second, the length energy term $E_\ell$ is not differentiable because it expects natural numbers as input and cannot be computed on real values which are dealt with in gradient-based optimization. The following describes an example of how each of the terms is approximated to be made differentiable.

**Approximate differentiable observation energy**

Consider a $N \times T$ matrix P containing negative log probabilities, i.e.

$$P[n, t] = -\log\, p\left(c_n|x_t\right). \tag{10}$$

Imagine a mask matrix M with the same size $N \times T$ where

$$M[n, t] = \begin{cases} 0 & if\ \alpha(t) \neq c_n \\ 1 & if\ \alpha(t) = c_n \end{cases}. \tag{11}$$

Using the mask matrix, the observation energy term can be rewritten as

$$E_o = \sum_{t=1}^{T}\sum_{n=1}^{N} M\left[n, t\right] \cdot P[n, t]. \tag{12}$$

In order to make the observation energy term differentiable with respect to the length, the present disclosure proposes to construct an approximate differentiable mask matrix $M^*$. The following smooth and parametric plateau function may be used

$$f(t|\lambda^c, \lambda^w, \lambda^s) = \frac{1}{(e^{\lambda^s(t-\lambda^c-\lambda^w)} + 1)(e^{\lambda^s(-t+\lambda^c-\lambda^w)} + 1)} \qquad (13)$$

This plateau function has three parameters and it is differentiable with respect to them: $\lambda^c$ controls the center of the plateau, $\lambda^w$ is the width and $\lambda^s$ is the sharpness of the plateau function. Of course, other differentiable plateau functions may be used.

While the sharpness of the plateau functions $\lambda^s$ used to construct the approximate mask $M^*$ is fixed as a hyper-parameter in this embodiment, the center $\lambda^c$ and the width $\lambda^w$ are computed from the lengths $\ell_{1:N}$. First the starting position of each plateau function $b_n$ is calculated as

$$b_1 = 0, b_n = \sum_{n'=1}^{n-1} \ell_{n'}. \qquad (14)$$

Then both the center and the width parameters of each plateau function can be defined as

$$\begin{aligned} \lambda_n^c &= b_n + \ell_n/2 \\ \lambda_n^w &= \ell_n/2 \end{aligned} \qquad (15)$$

and each row of the approximate mask can be defined as

$$M^*[n, t] = f(t|\lambda_n^c, \lambda_n^w, \lambda^s). \qquad (16)$$

Thus, each differentiable plateau function $M^*[n,t]$ is parametrized by at least one (here all) of a position of the plateau over the succession dimension (here time), e.g. $\lambda^c$, a length of the plateau, e.g. $\lambda^w$, and a sharpness of the plateau, e.g. $\lambda^s$. Note that the plateau functions are here of the same form for each term of the mask matrix, but they could differ from one another.

Now a differentiable approximate observation energy similar to (12) can be calculated as

$$E_o^* = \sum_{t=1}^{T} \sum_{n=1}^{N} M^*[n, t] \cdot P[n, t]. \qquad (17)$$

That is, the energy function $E$, and in particular the observation energy $E_o$, comprises a non-differentiable combination of terms (log $p$ ($c_n|x_t$)), and the differentiable approximation of the energy function $E^*$, in particular the approximate differentiable observation energy $E_o^*$ is calculated by combining said terms through a mask $M^*$ comprising at least one differentiable plateau function.

**Approximate Differentiable Length Energy**

For the gradient-based optimization, the length values must be relaxed to be positive real values instead of natural numbers. As the Poisson distribution (4) is only defined on natural numbers (notably due to the factorial operator), the present disclosure proposes to use a substitute distribution defined on real numbers. As a replacement, the length energy is approximated based on a Laplace distribution or a Gaussian distribution. In both cases, the scale or the width parameter of the distribution is assumed to be fixed.

The length energy $E_\ell$ can be rewritten as the approximate length energy

$$E_\ell^*(\ell_{1:N}) = \sum_{n=1}^{N} -\log p\,(\ell_n | \lambda_{c_n}^\ell) \qquad (18)$$

where $\lambda_{c_n}^\ell$ is the expected value for the length of a segment from the action $c_n$, e.g. the expected average length based on the reference length distribution. This expected length value $\lambda_{c_n}^\ell$ (length prior) may be obtained beforehand and input to the inference step.

In case of the Laplace distribution the length energy will be equal to

$$E_\ell^*(\ell_{1:N}) = \frac{1}{Z} \sum_{n=1}^{N} |\ell_n - \lambda_{c_n}^\ell|. \qquad (19)$$

This means that the approximate length energy will penalize any deviation from the expected average length linearly. Similarly, the following Gaussian distribution

$$E_\ell^*(\ell_{1:N}) = \frac{1}{Z} \sum_{n=1}^{N} |\ell_n - \lambda_{c_n}^\ell|^2 \qquad (20)$$

means that the Gaussian approximate length energy will penalize any deviation from the expected average length quadratically.

With the objective to maintain a positive value for the length during the optimization process, the lengths may be estimated in log space and converted to absolute space only in order to compute both the approximate mask matrix $M^*$ and the approximate length energy $E_\ell^*$.

Experiments show that in some cases, the Gaussian approximate length energy may, due to the quadratic penalty, dominate the total energy, whereas the Laplace approximate length energy provides a more balanced result with the approximate observation energy.

The total approximate energy function is defined as a weighted sum of both the approximate observation and the approximate length energy functions

$$E^*(\ell_{1:N}) = E_o^*(\ell_{1:N}, Y) + \beta E_\ell^*(\ell_{1:N}) \qquad (21)$$

where $\beta$ is the multiplier for the length energy. Experiments show that while the best accuracy is achieved with a multiplier $\beta$ of 0.05, the accuracy only changes to a reasonable extent with the value of the multiplier, at least when the approximate length energy is based on a Laplace distribution. Therefore, the proposed approach is robust to the choice of this hyper-parameter.

Given an initial length estimate $\ell_{1:N}^0$, this estimate is iteratively updated to minimize the approximate total energy. Figure 3 illustrates a step i of the iterative optimization according to an embodiment. During each optimization step i, the method first calculates the approximate energy $E^*$, based on the length model 22, the differentiable mask 24 and the frame-wise pattern probability estimates 26 (here in log scale) as described above, and then calculates the gradients $\frac{\partial E^*}{\partial \ell_{1:N}^{(i)}}$ of the energy with respect to the length values. Using the calculated gradients, the method updates (reference 28 in Fig. 3) the length estimate using a stochastic gradient descent update rule such as SGD or Adam, to obtain the lengths $\ell_{1:N}^{(i+1)}$ to use as an input for the following iteration step. After a certain number of iteration steps, the segment lengths are finally predicted as the latest length estimates. The method may comprise rounding the predicted segment lengths in order to transform them back from real numbers to discrete frame numbers.

During testing, if the transcript is provided, i.e. if the set of possible patterns comprises an ordered list of the patterns, then it is used (e.g. in a weakly supervised action alignment setting). However, if the transcript is not known (e.g. in a fully supervised approach or weakly supervised action segmentation), the optimization is performed for each of the transcripts seen during training and the most likely one is selected. Thus, in these cases, the set of possible patterns comprises a plurality of ordered lists of the pattern.

The initial length estimates may be calculated from the length model 22 of each approach in case of weakly supervised processing whereas in fully supervised the average length of each action class may be calculated from the training data and used as the initial length estimate. The initial length estimates are also used as the expected length parameters for the length energy calculations.

The optimization hyper-parameters like the choice of the optimizer, number of steps, and learning rate remain as the hyper-parameters of the segmentation method 20.

At each optimization step, the time complexity is $O(NT)$, where $N$ is the number of segments and $T$ is the length of the video because the method must create the $M^*$ matrix and calculate the element-wise multiplication. Overall, the segmentation method time complexity is $O(KNT)$, where $K$ is the number of optimization steps. In particular, the optimizing has a complexity which is linear with respect to the number of frames. Compared to the exact inference which has a time complexity of $O(LNT)$, where $L$ is the fixed value of 2000, the present segmentation method has a time complexity which is lower since K is usually 50 steps and N (number of actions to be segmented in the video) is on average 10.

Furthermore, the proposed approach is inherently a parallelizable optimization method (i.e. values of the mask, the element-wise multiplication, and the calculation of the gradient for each time step can be calculated in parallel) and is independent of any other time step values. In other words, each step of said iterative optimizing comprises at least two parallelizable calculations. This is in contrast to the dynamic programming approaches where the intermediate optimization values for each time step depend on the value of the previous time steps.

The above-described segmentation method 20 is evaluated on three different tasks: weakly supervised action segmentation, weakly supervised action alignment, and fully supervised action segmentation. The source code for the state-of-the-art approaches on each of these tasks is obtained and a model is trained using the standard training configuration of each model, e.g. to obtain the frame-wise pattern probability estimates. Then the inference 16 of the above segmentation method is applied as a replacement for an existing inference stage or as an additional inference stage.

The segmentation method is evaluated using the Breakfast dataset (Hilde Kuehne, Ali Arslan, and Thomas Serre. The language of actions: Recovering the syntax and semantics of goal directed human activities. In CVPR, 2014) on the three different tasks. Breakfast is the most popular dataset currently used for action segmentation. It contains more than 1700 videos of different cooking activities. The dataset consists of 48 different fine-grained actions. The evaluation experiments follow the 4 train/test splits provided with the dataset and report the average. The main performance metrics used for weakly supervised action segmentation and alignment are the same as the previous approaches. The input features are also kept the same depending on the approach the above segmentation method 20 is used with.

One of the major benefits of the iterative optimization used in the proposed segmentation method is the flexibility of choosing the number of optimization steps (iterations). The number of steps of the optimization can be a tool to trade-off speed vs. accuracy. In exact inference, speed vs. accuracy trade-off can use frame-sampling i.e. lowering the resolution of the input features, or hypothesis pruning i.e. beam search.

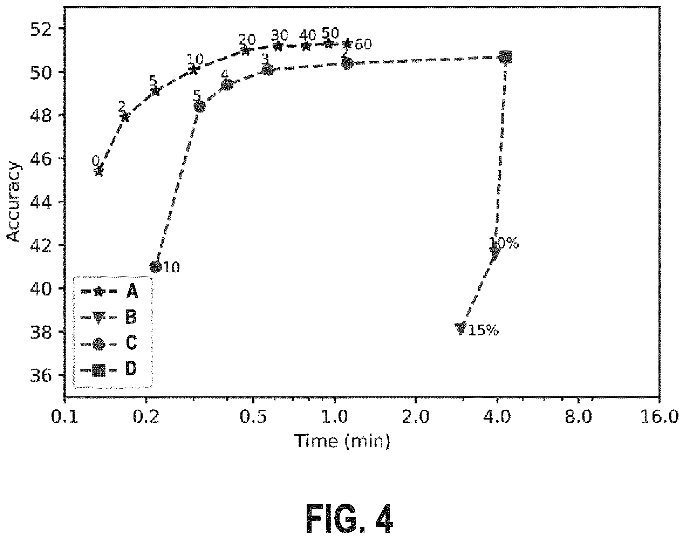

Figure 4 plots the speed vs. accuracy trade-off of exact inference compared to the present segmentation method. Specifically, Fig. 4 plots the accuracy in percentage as a function of the execution time, in minutes, shown in log scale. It can be observed that the above segmentation method 20 (curve A, wherein each point is labeled by the number of iteration steps) provides a much better speed-accuracy trade-off as compared to frame-sampling (curve C, wherein each point is labeled by the sampling factor) for exact inference (point D). Hypothesis pruning (curve B, wherein each point is labeled by the pruning factor, i.e. the percentage of the hypothesis that is removed or pruned after each iteration of the exact inference algorithm) mostly decreases the accuracy without providing any significant improvement in execution time. Numerical analysis shows that the proposed segmentation method achieves the best performance after 50 steps with 5.9% improvement on the MoF accuracy (i.e. average frame prediction accuracy) compared to not performing any inference. Moreover, it is more than 5 times faster than the exact inference (point D).

Now, the segmentation method is compared to other approaches, for each of the aforementioned three tasks.

**Weakly supervised action segmentation**

The segmentation method is applied on top of two state-of-the-art approaches for weakly supervised action segmentation namely MuCon (Yaser Souri, Mohsen Fayyaz, Luca Minciullo, Gianpiero Francesca, and Juergen Gall. Fast weakly supervised action segmentation using mutual consistency. In arXiv, 2019; hereinafter the "MuCon paper") and CDFL (Jun Li, Peng Lei, and Sinisa Todorovic. Weakly supervised energy-based learning for action segmentation. In ICCV, 2019). The results show that the segmentation method applied on CDFL achieves a 12 times faster inference speed while obtaining results comparable to exact inference. The segmentation method applied to MuCon achieves a 5 times faster inference speed and obtains a new state-of-the-art performance on the Breakfast dataset on several metrics.

**Weakly supervised action alignment**

Similar to weakly supervised action segmentation, the segmentation method is applied on top of CDFL and MuCon for weakly supervised action alignment task. As opposed to segmentation in which the transcript needs to be estimated, e.g. as detailed above, in alignment, the transcript of the video is known; in other words, the set of possible patterns comprises a single ordered list of patterns. The experiments show that the segmentation method applied on top of CDFL achieves state-of-the-art or better than state-of-the-art results on MoF and Mof-BG metrics, whereas the segmentation method applied on top of MuCon achieves state-of-the-art results for IoD and IoU metrics. MoF measures the Mean over Frames accuracy and is defined as the number of frames with correctly predicted labels divided by the total number of frames. MoF-BG is similar to MoF, but it only considers the ground truth frames which are not annotated as background. IoD, standing for Intersection over Detection, is only defined for the alignment task since the transcript and the number of segments are known for this task; IoD is computed by the average intersection of a ground truth segment with an associated predicted segment divided by the length of the predicted segment. IoU is similar to IoD but the ratio is calculated between the intersection and the union of the detection and ground truth. More details on these metrics may be found in the above-cited MuCon paper.

**Fully supervised action segmentation**

In the fully supervised action segmentation, the segmentation method is applied on top of MS-TCN (Yazan Abu Farha and Juergen Gall. MS-TCN: Multi-stage temporal convolutional network for action segmentation. CVPR, 2019, hereinafter the "MS-TCN paper") and its variant MS-TCN++ (Shijie Li, Yazan Abu Farha, Yun Liu, Ming-Ming Cheng, and Juergen Gall. MS-TCN++: Multi-stage temporal convolutional network for action segmentation. PAMI, 2020). MS-TCN and MS-TCN++ are approaches that do not perform any inference at test time. This usually results in over-segmentation and low F1 and Edit scores (F1 is a metric which is sensitive to noisy outputs and therefore penalizes oversegmentation. F1 and Edit are defined as in the MS-TCN paper). Thus, MS-TCN and MS-TCN++ are used as methods for computing the frame-wise pattern probability estimates in the segmenting method 20. Applying the above-described inference on top of these approaches improves the F1 and Edit scores significantly and allows achieving state-of-the-art performance and even setting new state-of-the-art performance on most metrics.

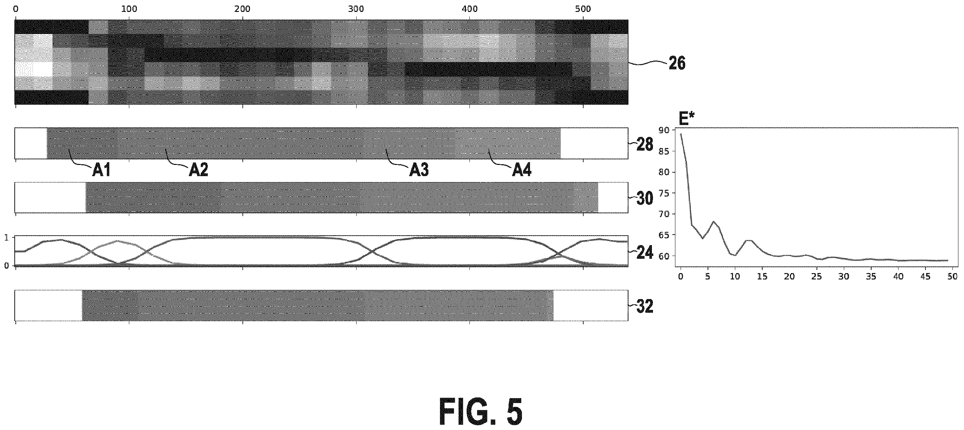

A qualitative example of the iterative optimization is depicted in Fig. 5. On the right-hand side of Fig. 5, the values of the total approximate energy $E^*$ are plotted as a function of the iteration step number. The left-hand side shows the negative log probability values 26 (i.e. the frame-wise pattern probability estimates), the ground truth segmentation 28, the optimization initialization 30, the masks 24 and the the predicted frame-wise pattern labels 32 (i.e. the segmentation after inference), all plotted as a function of the succession dimension (here time) from left to right.

The ground truth segmentation 28 represents the actual pattern segmentation of the input video, which is illustrated as a reference for evaluation but not given to the segmentation method 20. As can be seen, in this example, the ground truth segmentation comprises a sequence of four actions A1, A2, A3 and A4 having different durations, i.e. different spans over the succession dimension (time).

The optimization initialization 30 comprises, in this example, a transcript of the actions, i.e. the optimization initialization 30 "knows" which actions are to be detected in the video and their order. However, the length of these actions are not known, and initialized at a value based on the length model, as explained above.

Based on the optimization initialization 30 and the frame-wise pattern probability estimates 26, the segmentation method iteratively optimizes the lengths, in particular via the mask values (e.g. the center and width of each function of the masks 24) in order to minimize the approximate energy function $E^*$. After a desired number of iterations, either predetermined or when the energy meets a convergence criterion, the segmentation method 20 stops the iterations and outputs the latest values of the lengths (or any equivalent information, e.g. through the above function $\alpha(t)$ or the like) as the predicted frame-wise pattern labels 32.

Note that the masks 24 include, at the beginning and the end of the sequence, i.e. as the leftmost and rightmost portions of the succession dimension in Fig. 5, plateau functions which do not correspond to any action and therefore aim to locate the aforementioned background class. In general, there may not be background class frames at the beginning and/or at the end of the sequence or, conversely, there may be a background class at an intermediate position in the video.

As can be seen in the example of Fig. 5, the predicted frame-wise pattern labels are influenced by the reference length distribution, through the initialization (see e.g. action A3 which, in the predicted frame-wise pattern labels 32, is kept relatively large, consistently with the optimization initialization 30 as opposed to the ground truth segmentation 28), but also by the frame-wise pattern probability estimates 26 (see e.g. action A2 which has been significantly widened with respect to the initialization 30, based on the frame-wise pattern probability estimates 26).

In the example of Fig. 5, the optimization initialization 28 has an MoF score of 0.53, whereas the predicted frame-wise pattern labels 32 reach an MoF score of 0.75.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

**Claims**

1. A computer-implemented method (20) for segmenting patterns in a sequence of frames over a succession dimension, the method comprising:

   - computing (14) frame-wise pattern probability estimates (26) for the sequence;
   - inferring (16), from the frame-wise pattern probability estimates (26) and a set of possible patterns, predicted frame-wise pattern labels (32) for the sequence, wherein the inferring comprises iteratively optimizing a differentiable approximation ($E^*$) of an energy function ($E$), the energy function being a non-differentiable function that measures a compatibility between the frame-wise pattern probability estimates (26), the set of possible patterns and the predicted frame-wise pattern labels in the sequence.

2. The method of claim 1, wherein each frame comprises an image.

3. The method of claim 1 or 2, wherein the energy function ($E$) is non-differentiable with respect to pattern lengths ($\ell_{1:N}$).

4. The method of any one of claims 1 to 3, wherein the differentiable approximation of the energy function ($E^*$) is optimized by a gradient descent method.

5. The method of any one of claims 1 to 4, wherein the energy function comprises a non-differentiable combination of terms, and the differentiable approximation of the energy function ($E^*$) is calculated by combining said terms through a mask (24) comprising at least one differentiable plateau function.

6. The method of claim 5, wherein each of the at least one differentiable plateau function is parameterized by at least one of a position of the plateau over the succession dimension, a length of the plateau and a sharpness of the plateau.

7. The method of any one of claims 1 to 6, wherein the set of possible patterns comprises at least one ordered list of the patterns.

8. The method of any one of claims 1 to 7, wherein the energy function is a weighted sum of an observation energy ($E_o$), which represents a cost of assigning the pattern labels to each frame, and a length energy ($E_\ell$), which penalizes deviation of the length of a given pattern from a reference length distribution for said given pattern.

9. The method of claim 8, wherein the length energy is approximated based on a Laplace distribution or a Gaussian distribution.

10. The method of any one of claims 1 to 9, wherein each step of said iterative optimizing comprises at least two parallelizable calculations.

11. The method of any one of claims 1 to 10, wherein the optimizing has a complexity which is linear with respect to a number of the frames.

12. A computer program including instructions for executing the steps of a method according to any one of claims 1 to 11 when said program is executed by a computer.

13. A recording medium readable by a computer and having recorded thereon a computer program including instructions for executing the steps of a method according to any one of claims 1 to 11.

14. A system (S20) for segmenting patterns in a sequence of frames over a succession dimension, the system comprising:

- a computing module (M14) configured to compute frame-wise pattern probability estimates (26) for the sequence;
- an inferring module (M16) configured to infer, from the frame-wise pattern probability estimates (26) and a set of possible patterns, predicted frame-wise pattern labels (32) for the sequence, wherein the inferring comprises iteratively optimizing a differentiable approximation ($E^*$) of an energy function ($E$), the energy function being a non-differentiable function that measures a compatibility between the frame-wise pattern probability estimates (26), the set of possible patterns and the predicted frame-wise pattern labels in the sequence.

**15.** A driving method (10) for a vehicle, comprising:

- acquiring (12) a sequence of frames from at least one in-vehicle sensor;
- segmenting patterns in the sequence of sensors according to the method (20) of any one of claim 1 to 11;
- controlling (18) the vehicle based on the predicted frame-wise pattern labels in the sequence of frames.

FIG. 1

FIG. 2

FIG. 3

FIG. 4

FIG. 5

Europäisches
Patentamt

European
Patent Office

Office européen
des brevets

# EUROPEAN SEARCH REPORT

Application Number

EP 21 18 4408

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RICHARD ALEXANDER ET AL: "NeuralNetwork-Viterbi: A Framework for Weakly Supervised Video Learning", 2018 IEEE/CVF CONFERENCE ON COMPUTER VISION AND PATTERN RECOGNITION, IEEE, 18 June 2018 (2018-06-18), pages 7386-7395, XP033473658, DOI: 10.1109/CVPR.2018.00771 [retrieved on 2018-12-14] * page 7386, left-hand column, paragraph 1 * <br> * section 4; page 7388 * <br> * section 5; page 7398 * <br> * page 7390, left-hand column * | 1-15 | INV. G06K9/00 G06K9/62 |
| A | LI JUN ET AL: "Weakly Supervised Energy-Based Learning for Action Segmentation", 2019 IEEE/CVF INTERNATIONAL CONFERENCE ON COMPUTER VISION (ICCV), IEEE, 27 October 2019 (2019-10-27), pages 6242-6250, XP033723662, DOI: 10.1109/ICCV.2019.00634 [retrieved on 2020-02-24] * the whole document * | 1-15 | |

TECHNICAL FIELDS SEARCHED (IPC)

G06K

The present search report has been drawn up for all claims

| Place of search | Date of completion of the search | Examiner |
|---|---|---|
| The Hague | 1 December 2021 | Stan, Johann |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KINGMA, DIEDERIK P. ; JIMMY BA.** Adam: A method for stochastic optimization. *ICLR,* 2015
- **DUCHI ; JOHN ; ELAD HAZAN ; YORAM SINGER.** Adaptive subgradient methods for online learning and stochastic optimization. *Journal of machine learning research,* 2011, vol. 12.7
- **ALEXANDER RICHARD ; HILDE KUEHNE ; AHSAN IQBAL ; JUERGEN GALL.** Neuralnetwork-viterbi: A framework for weakly supervised video learning. *CVPR,* 2018
- **HILDE KUEHNE ; ALI ARSLAN ; THOMAS SERRE.** The language of actions: Recovering the syntax and semantics of goal directed human activities. *CVPR,* 2014
- **YASER SOURI ; MOHSEN FAYYAZ ; LUCA MINCIULLO ; GIANPIERO FRANCESCA ; JUERGEN GALL.** MuCon paper. *Fast weakly supervised action segmentation using mutual consistency,* 2019
- **JUN LI ; PENG LEI ; SINISA TODOROVIC.** Weakly supervised energy-based learning for action segmentation. *ICCV,* 2019
- **YAZAN ABU FARHA ; JUERGEN GALL.** MS-TCN: Multi-stage temporal convolutional network for action segmentation. *CVPR,* 2019
- **SHIJIE LI ; YAZAN ABU FARHA ; YUN LIU ; MING-MING CHENG ; JUERGEN GALL.** MS-TCN++: Multi-stage temporal convolutional network for action segmentation. *PAMI,* 2020